# EUROPEAN PATENT APPLICATION

(11) **EP 3 293 845 A1**
(43) Date of publication of application: **14.03.2018**
(21) Application number: 16290165.6
(22) Date of filing: 08.09.2016
(51) Int. Cl.: H02H 1/00, H02J 3/00, H04B 3/54, H02H 7/26

(54) **CIRCUIT BREAKER FOR POWER LINE COMMUNICATION**

(71) Applicant: ALCATEL LUCENT, 92100 Boulogne-Billancourt (FR)
(72) Inventor: Maes, Jochen, 2018 Antwerpen (BE); Coomans, Werner, 2018 Antwerpen (BE)
(74) Representative: Plas, Axel Ivo Michel

(57) **Abstract**

According to an embodiment a device (100) for protecting an electrical circuit having at least two contacts (102, 105) connected by an interrupting module (104) and a diplexer (101) is disclosed. The diplexer (101) splits a low frequency current and a communication signal, originating from power-line communication, such that the communication signal is conducted to a signal contact (103) of the device and can be exchanged with another device.

## Description

### Technical Field

The present disclosure generally relates to the protection of electrical circuits, for example by fuses or circuit breakers. And more specifically to the optimization of protection devices for powerline communication.

### Background

In order to protect an electrical circuit in an electrical installation against excessive currents and/or voltages, devices like circuit breakers and/or fuses are used. These devices are installed in between the electrical circuit that needs to be protected and the mains power connection. The device then disconnects the circuit from the power supply when a fault and/or an abnormality such as an overcurrent occurs.

Those electrical circuits are in the first place designed to transport electrical power to electrical devices. Nonetheless, the electrical circuits may also be used to transmit communication signals from one contact in the electrical installation to another one. Such data communication in an electrical installation is called power-line communication.

A way to transmit a communication signal from one contact to another is connecting an adapter designed for power-line communication to a socket in one room, for example a living-room, and another adapter designed for power-line communication to a socket in another room, for example a bedroom. Generally, the electrical circuit of a living room is protected by a different fuse or circuit breaker than that of a bedroom, meaning that a communication signal transmitted by a first adapter and received by a second one in two different circuits passes through a fuse or circuit breaker protecting a first circuit, through the mains power connection, and subsequently through a fuse or circuit breaker protecting a second circuit.

### Summary

It is however a drawback that a communication signal passes through these fuses or circuit breakers and the mains power connection since the communication signal is attenuated in the fuse or circuit breaker and by its passage over the mains power connection. This results in a lower capacity of the communication link and, hence, a decreased performance of the power-line communication.

It is a further drawback that a noise signal produced by other electrical devices connected to a circuit will pass through a fuse box and will be transferred to other circuits in the electrical installation. Even if it originates from a circuit that is not used for power-line communication. A noise signal produced on a particular circuit will therefore reduce the performance of power-line communication in the entire electrical installation.

Another drawback is that power-line communication used in one domestic electrical installation may reduce the efficiency of power-line communication in another domestic electrical installation since the two domestic electrical installations may both be connected at a low-voltage side of a distribution transformer, or may even share a same bus bar in, for example, an apartment building. A noise signal produced on one domestic electrical installation can therefore reduce the performance of power-line communication in other domestic electrical installations.

It is therefore an object to disclose a device and system that overcomes the above identified drawbacks and to provide a device and system for protecting an electrical circuit with improved power-line communication capabilities.

This object is achieved, in a first aspect, by a device for protecting an electrical circuit, the device having at least two contacts connected by an interrupting module triggerable when an overcurrent and/or overload is detected, the device further comprising a diplexer and a signal contact, the diplexer configured to split a communication signal from a power carrying current received at one of the contacts and to transfer the communication signal to the signal contact.

The interrupting module may for example be a fuse or a circuit breaker. A diplexer is a filter element and separates two different frequency bands. By combining a fuse or a circuit breaker with a diplexer and a signal contact in a device for protecting an electrical circuit, a power current at low frequencies, for example 50Hz or 60Hz, and a communication signal at high frequencies, for example in the range of 1.8 to 250 MHz, can be split and forwarded to separate contacts. A power current as well as a communication signal are received at one of the contacts of the device. The diplexer is connected to this contact such that the power current passes through the diplexer and subsequently to the fuse or circuit breaker. The communication signal passes as well through the diplexer and the communication signal is further transferred to the signal contact. By the use of a diplexer which splits the power current from the communication signals, the communication signal doesn't run through the fuse or circuit breaker and, therefore, does not suffer from the attenuation caused by the interrupting module because the impedance causing the attenuation is bypassed. Moreover, the signal does not reach the mains power trunk cable, avoiding further attenuation, and is also isolated from any noise signals coming from that same mains power trunk cable. Hence, an improved performance is achieved since a higher throughput is obtained and more bandwidth is made available for power-line communication.

According to an embodiment, the signal contact corresponds to a telecommunication network interface.

Since a signal contact is connected to a high-pass filter conducting a communication signal, a telecommunication network interface can be used to connect a device to another device and/or equipment in a computer network in order to transmit the communication signal. The advantage is that a telecommunication network interface is commonly available.

According to an embodiment, the signal contact corresponds to a registered jack.

By using a registered jack, such as for example a RJ-45, a standardized connector can be used to connect the device to another device and/or equipment in a computer network.

According to an embodiment, the signal contact corresponds to wireless interface.

By using wireless communication, no electrical current will conduct from the signal contact, hence safety hazards are reduced. The wireless interface may further comprise a radio-frequency up/down convertor to convert an essentially baseband signal (e.g. 1.8 to 250 MHz) to a frequency band suited or licensed for wireless communication.

According to an embodiment, the diplexer comprises a port for high frequency signals, a port for low frequency currents and a common port, wherein the ports are connected to one of the at least two contacts, to the signal contact and to the interrupting module.

In other words, the diplexer is incorporated in the device by connecting its ports to one of the contacts, to the signal contact and to a fuse or a circuit breaker.

According to an embodiment, the port for high frequency signals is connected to the signal contact, the port for low frequency currents is connected to the interrupting module and the common port is connected to one of the at least two contacts.

One way to incorporate the diplexer in the device is thus by connecting the port for high frequency signals to the signal contact, the port for low frequency currents to a fuse or a circuit breaker and the common port to one of the contacts. A low frequency current and a communication signal received at one of the at least two contacts is split such that the low frequency current is conducted to a fuse or a circuit breaker and the communication signal to the signal contact. In this case, the diplexer resides between the domestic electrical circuit and the fuse.

According to an embodiment, the port for high frequency signals is connected to the signal contact, the port for low frequency currents is connected to one of the at least two contacts and the common port is connected to the interrupting module.

Another way to incorporate the diplexer in the device is thus by connecting the port for high frequency signals to the signal contact, the port for low frequency currents to one of the contacts and the common port to a fuse or a circuit breaker. A low frequency current as well as a communication signals flows through a fuse or a circuit breaker and is split by the diplexer such that the communication signal is conducted to the signal contact and the power load to one of the contacts of the device. In this case, the diplexer resides between the mains power trunk cable and the fuse or circuit breaker.

According to an embodiment, the diplexer comprises a high-pass filter, and wherein the high-pass filter comprises a source port and a filtered port, and wherein the source port is connected to the common port and to the port for low frequency currents and wherein the filtered port is connected to the port for high frequency signals.

In other words, the common port and the port for low frequency currents are connected to each other and to the source port of a high-pass filter. The filtered port of a high-pass filter is connected to the port for high frequency signals. The advantage is that the diplexer only requires one component, namely the high-pass filter in order to split a communication signal from a received low frequency current and a communication signal received at the common port or the port for low frequency loads. The cut-off frequency of the high-pass filter can be adapted to the spectrum of the communication signal, in for example the range of 1.8 to 250 MHz.

According to an embodiment, the diplexer comprises a high-pass filter and a low-pass filter, and wherein the high-pass filter and the low pass filter each comprise a source port and a filtered port, wherein the source ports are connected to the common port, the filtered port of the high-pass filter to the port for high frequency signals and the filtered port of the low-pass filter to the port for low frequency currents.

The diplexer can also comprise an additional component, namely a low-pass filter. The source ports of high-pass and low-pass filters are jointly connected to the common port and the filter ports to the port for high frequency signals for the high-pass filter respectively to the port for low frequency loads for the low-pass filter. The cut-off frequency of the low-pass filter can be adapted to the spectrum of a low frequency current, for example 50Hz or 60Hz.

An advantage of using a low-pass filter is that a high frequency signal coming from a domestic electrical circuit is not allowed to reach the mains power trunk cable, and is completely forwarded to the high frequency signal port of the diplexer. Another advantage of using a low-pass filter is that, even if a circuit is not used for power-line communication, a noise signal produced in such a circuit will pass through such a low-pass filter and will be partly attenuated such that it doesn't negatively influence power-line communication in other circuits of the electrical installation.

According to an embodiment, the diplexer comprises a high-pass filter and a low-pass filter, and wherein the high-pass filter and the low pass filter each comprise a source port and a filtered port, and wherein the source ports are connected to the port for low frequency currents; and wherein the filtered port of the high-pass filter to the port for high frequency signals and the filtered port of the low-pass filter to the common port.

High-pass and low-pass filters can also be connected differently, namely by connecting the source ports to the port for low frequency currents and the filtered ports to the port for high frequency signals for the high-pass filter respectively to the port for low frequency currents for the low-pass filter.

According to an embodiment, the signal contact further comprises a conversion module configured to convert the communication signal into a non-electrical communication signal.

A conversion module connects the signal contact to the diplexer such that the received signal at the signal contact is a non-electrical conducted signal, such as a wireless or an optical signal. The conversion module may, for example, comprise a radio-frequency up/down convertor for converting between an essentially baseband signal and a passband signal suited for wireless communication in a desired frequency band. Alternatively, the conversion module may perform electrical-optical convertor for converting an electrical signal and an optical signal suited for communication on a desired optical wavelength. Hence, the device is suitable to connect with other devices using a non-electrical signal.

According to a second aspect, the disclosure relates to a system comprising two of the devices according to the first aspect of the disclosure and a communication bus, and wherein the two devices are connected by the signal contact to the communication bus and wherein the communication bus is adapted to delay a communication signal between the two devices.

A communication bus can for example be a wire or an optical fibre or a wireless frequency band such that a communication signal can be transferred through the communication bus to another device. Such a communication bus can for example also contain additional filtering and/or amplifiers to transfer signals from one device to another device. Using a communication bus is advantageous due to its simplicity to interconnect at least two devices.

According to a third aspect, the disclosure relates to a system comprising two devices according to the first aspect of the disclosure and an interconnecting network device, and wherein the two devices are connected by the signal contact to the interconnecting network device.

The interconnecting network device can for example be a network hub, a gateway, a router, a switch, a repeater or another device configured to receive, transmit and/or retransmit a communication signal. Since at least two devices according to the first aspect of the disclosure are connected to the interconnecting network device by their respective signal contact, it is an advantage that a communication signal originating from one of the devices can be transmitted to another device in an efficient, repeating and/or intelligent way, depending on the type of the interconnecting network device. The interconnecting network device may comprise optical communication, allowing an unambiguous isolation of electrical signals from different devices. Electrical to optical signal conversion may take place inside the interconnecting network device itself, or may take place near the signal contact of the device for protecting an electrical circuit.

According to an embodiment, the interconnecting network device comprises a conversion module for converting communication signals received from the two devices to non-electrical communication signals.

The communication signal can also be converted in an interconnecting network device instead of the device itself.

### Brief Description of the Drawings

Fig. 1 schematically illustrates a device for protecting an electrical circuit comprising an interrupting module and a diplexer according to an embodiment of the disclosure;
Fig. 2 schematically illustrates a diplexer comprising a high-pass filter according to an embodiment of the disclosure;
Fig. 3 schematically illustrates a diplexer comprising a high-pass filter and a low-pass filter according to an embodiment of the disclosure;
Fig. 4 schematically illustrates a diplexer comprising a high-pass and a low-pass filter according to an alternative embodiment of the disclosure;
Fig. 5 schematically illustrates a device for protecting an electrical circuit comprising a conversion module for converting communication signals;
Fig. 6 schematically illustrates two devices connected to a power source and to a communication bus; and
Fig. 7 schematically illustrates two devices connected to a power source and to an interconnecting network device.

### Detailed Description of Embodiment(s)

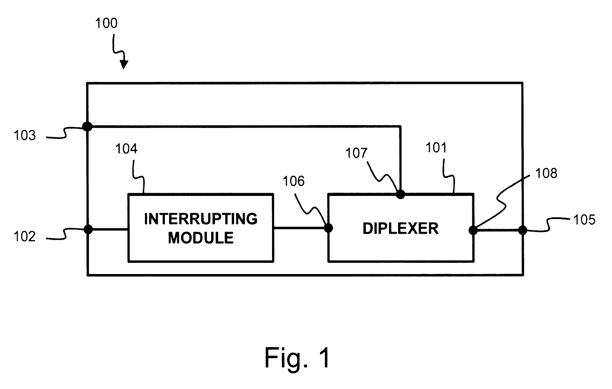

According to an embodiment, the disclosure relates to a device for protecting an electrical circuit comprising a diplexer. Figure 1 schematically illustrates such a device. The device 100 has at least two contacts 102, 105 to connect the device 100 to an electrical circuit. The device 100 further comprises an interrupting module 104, a diplexer 101 and a signal contact 103. The interrupting module 104 can for example be a fuse or a circuit breaker.

The device 100 is placed in series in an electrical circuit via the contacts 102 and 105. At the contact 105 a low frequency current and a communication signal can be received and conducted to the diplexer 101. The diplexer 101 comprises a port 107 for high frequency signals, a port 106 for low frequency currents and a common port 108. The low frequency current and communication signal received at the contact 105 is conducted to common port 108 of the diplexer 101. In the diplexer 101 the low frequency current and communication signal are split such that the low frequency current is conducted to the port 106 for low frequency currents and the communication signal to the port 107 for high frequency signals of the diplexer 101. The port 106 for low frequency currents is connected to the interrupting module 104 such that in case of an overcurrent and/or overload in the electrical circuit the interrupting module 104 is triggered and that the circuit is interrupted. The diplexer 101 further conducts the communication signal to the port 107 for high frequency signals. This port 107 is connected to the signal contact 103 of the device 100.

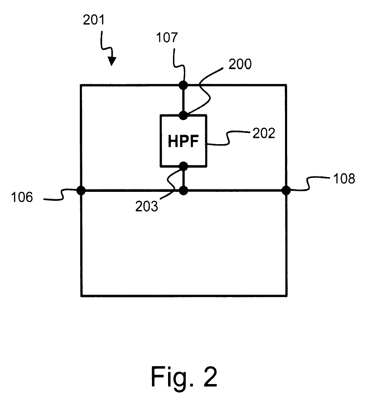

According to an embodiment, the diplexer comprises a high-pass filter (HPF). Figure 2 illustrates such a diplexer. The HPF 202 comprises a source port 203 and a filtered port 200. The source port 203 is connected to the common port 108 as well as to the port 106 for low frequency currents of the diplexer 201. Hence the latter two ports 106 and 108 are connected as well. A low frequency current and communication signal received at the common port 108 and/or at the port 106 for low frequency currents is split such that the communication signal is conducted through the HPF 202 and outputted at the filtered port 200. This filtered port 200 is subsequently connected to the port 107 for high frequency signals of the diplexer 201.

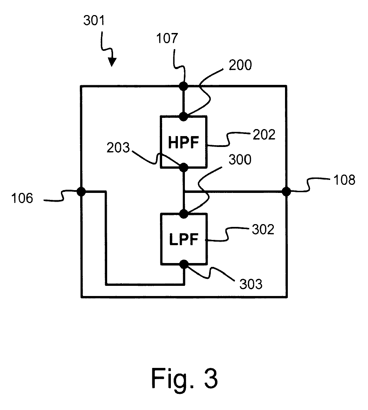

According to an embodiment, the diplexer can also comprise a low-pass filter (LPF). Figure 3 illustrates such a diplexer. The LPF 302 comprises a source port 300 and a filtered port 303. According to an embodiment, the source port 203, 300 of the HPF 202 respectively the LPF 302 are interconnected and further connected to the common port 108 of the diplexer 301. The filtered port 303 of the LPF 302 is connected to the port 106 for low frequency currents of the diplexer 301 and the filtered port 200 of the HPF 202 is connected to the port 107 for high frequency signals of the diplexer 301.

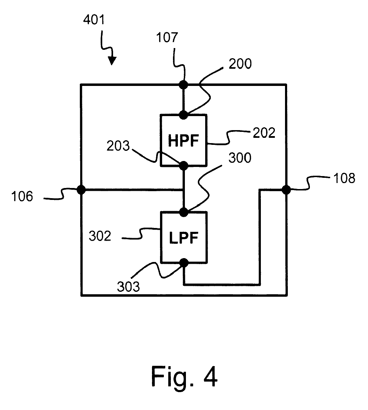

According to an embodiment, the filters 202, 302 in the diplexer can also be connected in an alternative way. Figure 4 is an illustration of such an alternative embodiment. The source ports 203, 300 of the filters are again interconnected and subsequently connected to the port 106 for low frequency currents of the diplexer 401. The filtered port 303 of the LPF 302 is connected to the common port 108 of the diplexer 401 and the filtered port 200 of the HPF 202 is connected to the port 107 of high frequency signals of the diplexer 401.

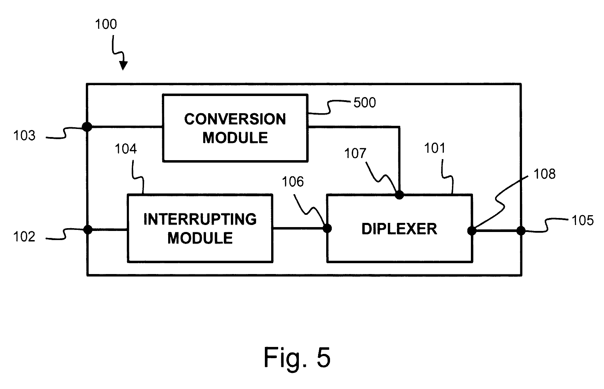

According to an embodiment, the device 100 further comprises a conversion module for converting communication signals into non-electrical communication signals such as a wireless or an optical signal. Figure 5 illustrates such a device. The conversion module 500 may, for example, comprise a radio-frequency up/down convertor for converting between an essentially baseband signal and a passband signal suited for wireless communication in the desired frequency band. Alternatively, the conversion module 500 may, for example, perform electrical-optical conversion for converting between an electrical signal and an optical signal suited for communication on a desired optical wavelength.

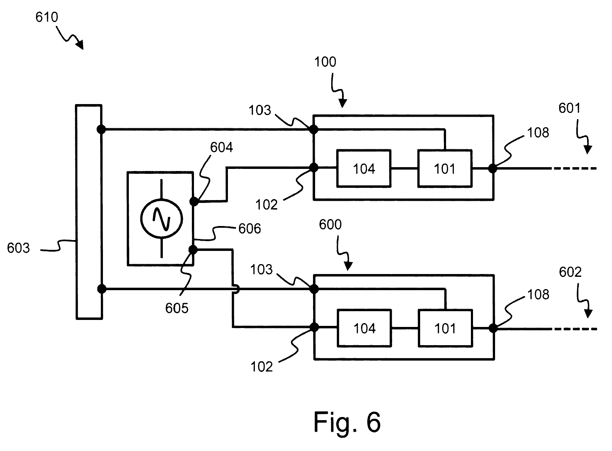

Figure 6 shows a system comprising two devices according to the above embodiments. Besides the at least two devices 100, 600, the system 610 further comprises a communication bus 603 and a power source 606. The devices 100, 600 are, through one of their contacts, for example 102, connected to an electric power source 606. The electric power source 606 may have different connections, such as 604, 605, which may for example correspond to different voltage levels and/or different phases. The devices 100, 600 are through their other contact 108 connected to a circuit, for example circuits 601 and 602. For device 100 this is for example circuit 601 and for device 600 this is for example circuit 602. The interrupting module 104 of the respective devices 100, 600 protect their corresponding circuit 601, 602 in case an overcurrent and/or overload is detected.

In each circuit 601, 602 a communication signal may be transmitted. If, for example, a communication signal is transmitted in circuit 601, the diplexer 101 of device 100 will conduct this communication signal via its signal contact 103 through a communication bus 603 through which it may be conducted to the signal contact 103 of device 600. In device 600 the communication signal is conducted by the diplexer 101 from the signal contact 103 to the contact 108. Next, the communication signal may be received in circuit 602. The communication bus may for example be a conducting wire or an optical fibre.

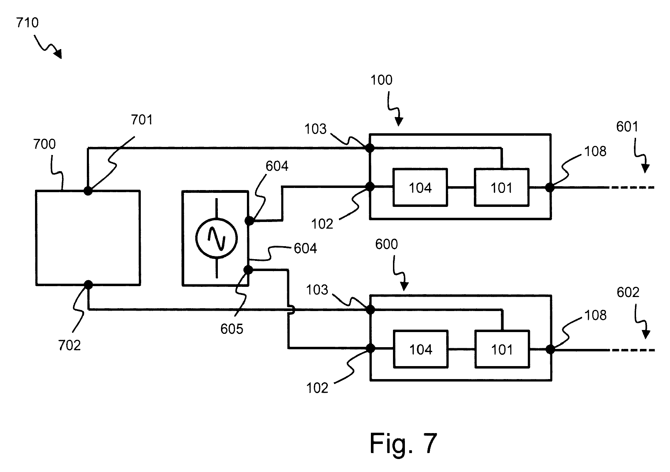

According to an embodiment, a system may comprise an interconnecting network device instead of a communication bar. Figure 7 illustrates such a system 710. An interconnecting network device 700 may for example be a network hub, a gateway, a router, a switch, a repeater or another device configured to receive, transmit and/or retransmit a communication signal. The interconnecting network device 700 may have several ports, such as 701 and 702, suitable to be connected with a signal contact 103 of for example devices 100 and 600. If a communication signal is received, the interconnecting network device 700 can efficiently retransmit the communication signal to another device. The interconnecting network device may comprise electrical-optical conversion, to avoid a flow of electrical signals between two devices.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A device (100) for protecting an electrical circuit, the device having at least two contacts (102, 105) connected by an interrupting module (104) triggerable when an overcurrent and/or overload is detected, the device further comprising a diplexer (101) and a signal contact (103), the diplexer (101) configured to split a communication signal from a power carrying current received at one of the contacts (102, 105) and to transfer the communication signal to the signal contact (103).

2. A device according to claim 1, wherein the signal contact (103) corresponds to a telecommunication network interface.

3. A device according to claim 1, wherein the signal contact (103) corresponds to a registered jack.

4. A device according to claim 1, wherein the signal contact (103) corresponds to a wireless interface.

5. A device according to claim 1, wherein the diplexer (101) comprises a port (107) for high frequency signals, a port (106) for low.frequency currents and a common port (108), wherein the ports are connected to one of the at least two contacts (102, 105), to the signal contact (103) and to the interrupting module (104).

6. A device according to claim 5, wherein the port (107) for high frequency signals is connected to the signal contact (103), the port (106) for low frequency currents is connected to the interrupting module (104) and the common port (108) is connected to one of the at least two contacts (102, 105).

7. A device according to claim 5, wherein the port (107) for high frequency signals is connected to the signal contact (103), the port (106) for low frequency currents is connected to one of the at least two contacts (102, 105) and the common port (108) is connected to the interrupting module (104).

8. A device according to claim 5 wherein the diplexer (201) comprises a high-pass filter (202), and wherein the high-pass filter (202) comprises a source port (203) and a filtered port (200), and wherein the source port (203) is connected to the common port (108) and to the port (106) for low frequency currents; and wherein the filtered port (200) is connected to the port (107) for high frequency signals.

9. A device according to claim 5, wherein the diplexer (301) comprises a high-pass filter (202) and a low-pass filter (302), and wherein the high-pass filter (202) and the low pass filter (302) each comprise a source port (203, 300) and a filtered port (200, 303), wherein the source ports (203, 300) are connected to the common port (108), the filtered port (200) of the high-pass filter (202) to the port (107) for high frequency signals and the filtered port (303) of the low-pass filter (302) to the port (106) for low frequency currents.

10. A device according to claim 5, wherein the diplexer (401) comprises a high-pass filter (202) and a low-pass filter (302), and wherein the high-pass filter (202) and the low pass filter (302) each comprise a source port (203, 300) and a filtered port (200, 303), and wherein the source ports (203, 300) are connected to the port (106) for low frequency currents, the filtered port (200) of the high-pass filter (202) to the port (107) for high frequency signals and the filtered port (303) of the low-pass filter (302) to the common port (108).

11. A device according to claim 5, wherein the signal contact (103) further comprises a conversion module (500) configured to convert the communication signal into a non-electrical communication signal.

12. A system (610) comprising two of the devices (100, 600) according to claim 1 and a communication bus (603), and wherein the two devices (100, 600) are connected by the signal contact (103) to the communication bus (603); and wherein the communication bus (603) is adapted to relay a communication signal between the two devices (100, 600).

13. A system (710) comprising two of the devices (100, 600) according to claim 1 and an interconnecting network device (700), and wherein the two devices (100, 600) are connected by the signal contact (103) to the interconnecting network device (700).

14. A system (710) according to claim 13 wherein the interconnecting network device comprises a conversion module for converting communication signals received from the two devices to non-electrical communication signals.
